# EUROPEAN PATENT APPLICATION

(11) **EP 1 783 522 A1**
(43) Date of publication of application: **09.05.2007**
(21) Application number: 05023938.3
(22) Date of filing: 03.11.2005
(51) Int. Cl.: G02B 6/38

(54) **Axially loaded optical fibre connector assembly**

(71) Applicant: Ridgemount Technologies Limited, Launton Bicester Oxfordshire OX26 5EL (GB)
(72) Inventor: Peters, Christopher Russell c/o Ridgemount, Long Crendon HP18 9BB (GB); Limbert, Mark John c/o Ridgemount Technologies, Long Crendon HP18 9BB (GB)
(74) Representative: Chapman, Helga Claire

(57) **Abstract**

An optical fibre assembly 10 comprises first and second fibre ferrules 22, 24, key collars 26, 28, ferrule holders 32, 34, a load spring 16 and load balancing discs 18, 20. The balancing discs 18. 20 each have a generally conical shaped profiled balancing face 18a, 20a on one side, and are arranged with their balancing faces 18a, 20a facing and coupled to one another such that the balancing discs 18, 20 are free to rock relative to one another. One balancing disc 18 has a key socket 90 provided on its other side, for receiving the ends of the key collars 26, 28. The other balancing disc 20 has a spring seat 92 provided on its other side, for receiving on end of the load spring 16. The load spring 16 acts through the balancing discs 18, 20 and the key collars 26, 28 on the fibre ferrules 22, 24.

## Description

The invention relates to an optical fibre assembly.

Existing optical connectors are generally quite bulky compared to the dimensions of the optical fibres which they are used with. This is at least partly due to their incorporating a load spring for each fibre ferrule within the connector.

According to an aspect of the invention there is provided an optical fibre assembly comprising:
a plurality of fibre ferrules each for holding an optical fibre;
a resilient member acting on the fibre ferrules, to thereby apply an axial load onto the fibre ferrules, the load acting towards their distal ends; and
load balancing apparatus operable to substantially equally distribute the axial load between the fibre ferrules.

Preferably, a corresponding plurality of uni-orientational key members are provided, one around at least part of each fibre ferrule.

The optical fibre assembly preferably further comprises a corresponding plurality of ferrule holders in one end of which the optical fibre insertion ends of the respective fibre ferrules are received, the uni-orientational key members being provided around the respective ferrule holders.

The load balancing apparatus is preferably provided between the resilient member and the fibre ferrules. The load balancing apparatus is preferably provided between the resilient member and the key members, the resilient member thereby acting on the fibre ferrules through the key members.

The load balancing apparatus preferably comprises a pair of balancing members which are arranged to rock relative to one another. The balancing members are preferably balancing discs. Preferably, each balancing member has a profiled balancing face on one side, and the balancing members are arranged with their balancing faces facing and coupled to one another such that the balancing members are free to rock relative to one another. The profiled balancing faces are preferably generally conical or domed in shape.

Each balancing member preferably has a plurality of ferrule holder sockets provided axially through it, for receiving the other ends of the ferrule holders, and the balancing members are arranged with their plurality of ferrule holder sockets correspondingly aligned.

Preferably one balancing member has at least one key member socket provided on its other side, in which one end of each key member is received, thereby fixing the orientation of the fibre ferrules relative to the balancing members. The other balancing member is preferably provided with a seat for receiving one end of the resilient member, the resilient member and the axial force which it exterts, thereby being coupled through the balancing members, key members and ferrule holders to act on the fibre ferrules.

The resilient member preferably comprises a spiral spring.

An embodiment of the invention will now be described, by way of example only, with reference to the accompanying drawings, in which:
Figure 1 is diagrammatic view from above (as shown in the drawings) of an optical fibre assembly according to an embodiment of the invention, with two optical fibres mounted therein;
Figure 2 is an isometric view of the optical fibre assembly of Figure 1, without the optical fibres;
Figure 3 is a diagrammatic view of a fibre ferrule, ferrule holder and key member of the assembly of Figure 1;
Figure 4 is an end view in direction A of the fibre ferrule and key member of Figure 3;
Figure 5 is a side view of the balancing discs of the assembly of Figure 1; and
Figure 6 (a) is an isometric view of one of the balancing discs of Figure 5, (b) is a view from above (as shown in the drawing) of the balancing disc of (a), and (c) is a front view of one of the balancing discs of (a).

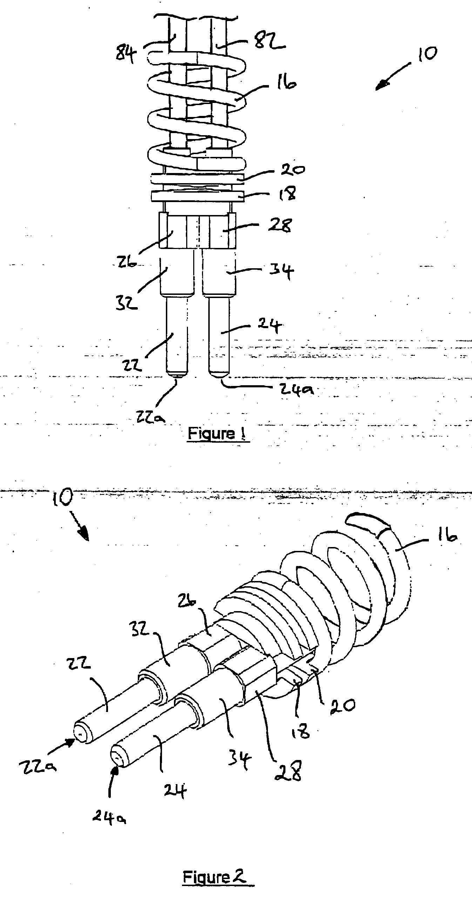

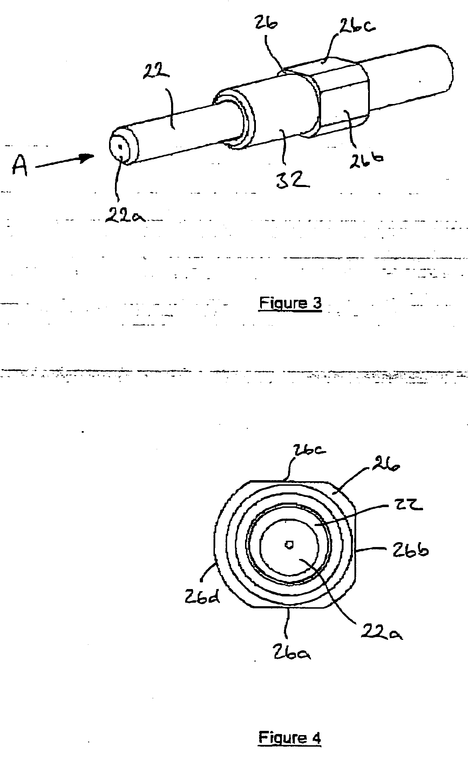

Referring to Figures 1 and 2, an embodiment of the invention provides an optical fibre assembly 10 comprising first and second fibre ferrules 22, 24, uni-orientational key members in the form of asymmetric key collars 26, 28, a load spring 16 and load balancing discs 18, 20.

The fibre ferrules 22, 24 are circular cylindrical ceramic ferrules formed with angle polished end faces 22a, according to an IEC standard specification for optical fibre ferrules. The asymmetric key collars 26, 28 are provided on tubular ferrule holders 32, 34, in which the optical fibre insertion ends of the ferrules 22, 24 are received. The key collars 26, 28 encircle the respective ferrule holders 32, 34 and thus the fibre ferrules 22, 24.

The key collars 26, 28 are generally circular in cross-section, with segments removed from each of three of the quadrants of the collars to give the key collars 26, 28 three flat key faces 26a, 26b, 26c (as shown in Figures 3 and 4) and one curved key face 26d. The three flat key faces 16a, 16b, 16c form part of each of three sides of a square; key faces 16a and 16c being generally parallel with one another and key face 16b being generally perpendicular to them.

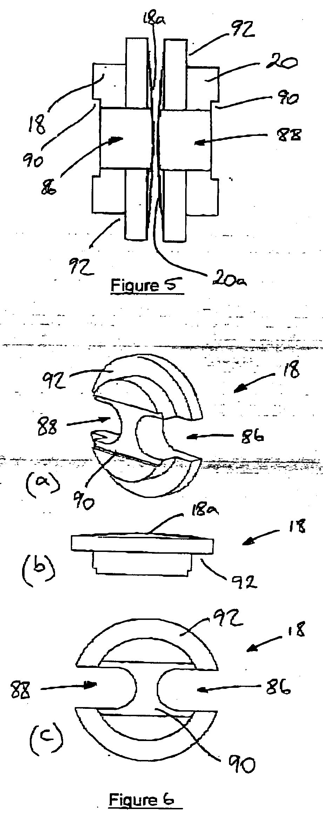

As shown in Figures 5 and 6, the balancing discs 18, 20 each have a generally conical shaped profiled balancing face 18a, 20a on one side, and are arranged with their balancing faces 18a, 20a facing and coupled to one another such that the balancing discs 18, 20 are free to rock relative to one another.

Two ferrule holder sockets 86, 88 extend axially through each balancing disc, for receiving the other ends of the ferrule holders 32, 34. The balancing discs 18, 20 are arranged with their ferrule holder sockets 86, 88 aligned.

Each balancing disc 18, 20 has a key collar socket 90 in the form of a generally rectangular shaped recess provided on its other side, in which the rear ends of the key collars 26, 28 are seated, to thereby set the orientation of the fibre ferrules 22, 24 relative to the balancing discs 18, 20. Each balancing disc is also provided with a spring seat 92 in which the front end of the load spring 16 is received, the load spring 16 and the axial force which it exterts, thereby being coupled through the balancing discs 18, 20, the key collars 26, 28 and the ferrule holders 32, 34 to act on the fibre ferrules 22, 24, as shown in Figures 1 and 2.

The fibre ferrules 22, 24, and thus the first and second optical fibres 82, 84 are free to float within the assembly 10, and thus within an optical fibre connector or an optical apparatus in which the assembly 10 is provided. The freedom of the fibre ferrules 22, 24 to float isolates them from external vibrations and enables proper optical alignment of the fibres 82, 84.

The optical fibre assembly 10 is assembled onto a fibre optic cable (not shown) containing first and second optical fibres 82, 84 as follows. The fibre optic cable 80 is stripped to expose the optical fibres 82, 84. The rear ends of the fibre ferrules 22, 24 are pressed into their respective ferrule holder 32, 34, around which the key collars 26, 28 are located. The ends of the optical fibres 82, 84 are then stripped and the fibre ferrules 22, 24 (with the ferrule holders 32, 34 and key collars 26, 28 fitted) are threaded onto their respective optical fibre. The coupling ends 22a, 24a of the fibre ferrules 22, 24 are then polished.

The assembly spring 68, load spring 16, and the balancing discs 18, 20 are fitted over the fibre ferrules 22, 24 and pushed towards the optical cable. The balancing discs 18, 20 are fitted such that their balancing faces 18a, 20a face each other, as shown in Figure 5. The rear ends of the ferrule holders 32, 34 are located through the ferrule holder sockets 86, 88 on the balancing discs and the rear ends of the key collars 26, 28 are located in the key collar socket 90 on the front balancing disc 18, as shown in Figures 1 and 2.

Various modifications may be made to the described embodiment without departing from the scope of the present invention. For example, the optical fibre assembly may comprise a greater number of fibre ferrules, ferrule holders and key collars, for receiving a greater number of optical fibres. The key collars may be of a different shape and asymmetric configuration to that shown, and may have a different number of flat key faces. The load spring may be replaced by a different type of resilient member. The balancing discs may be of a different shape and configuration to that shown, and in particular may have domed profiled balancing faces, and may have a different shaped key socket and spring seat.

The described embodiment provides various advantages, as follows. The use of a single load spring in conjunction with the balancing discs to apply a load onto both ferrules results in the optical fibre assembly being significantly smaller than existing optical fibre assemblies for an equivalent number of optical fibres. In addition, the balancing discs of the present invention ensure that the load is equally distributed between the fibre ferrules. Optical fibre connectors incorporating the optical fibre assembly of the present invention will also be significantly smaller than those which require a load spring for each fibre ferrule.

The balancing discs of the optical fibre assembly also act to isolate the fibre ferrules, and thus the fibres held within them, from external vibrations.

## Claims

1. An optical fibre assembly comprising:
a plurality of fibre ferrules each for holding an optical fibre;
a resilient member acting on the fibre ferrules, to thereby apply an axial load onto the fibre ferrules, the load acting towards their distal ends; and
load balancing apparatus operable to substantially equally distribute the axial load between the fibre ferrules.

2. An optical fibre assembly as claimed in claim 1, wherein a corresponding plurality of uni-orientational key members and a corresponding plurality of ferrule holders are provided in one end of which the optical fibre insertion ends of the respective fibre ferrules are received, the uni-orientational key members being provided around the respective ferrule holders.

3. An optical fibre assembly as claimed in claim 2, wherein the load balancing apparatus is provided between the resilient member and the key members, the resilient member thereby acting on the fibre ferrules through the key members.

4. An optical fibre assembly as claimed in claim 3, wherein the load balancing apparatus comprises a pair of balancing members which are arranged to rock relative to one another.

5. An optical fibre assembly as claimed in claim 4, wherein each balancing member has a profiled balancing face on one side, and the balancing members are arranged with their balancing faces facing and coupled to one another such that the balancing members are free to rock relative to one another.

6. An optical fibre assembly as claimed in claim 5, wherein the profiled balancing faces are generally conical or domed in shape.

7. An optical fibre assembly as claimed in claims 5 or 6, wherein one balancing member has at least one key member socket provided on its other side, in which one end of each key member is received, thereby fixing the orientation of the fibre ferrules relative to the balancing members.

8. An optical fibre assembly as claimed in claim 7, wherein the other balancing member is provided with a seat for receiving one end of the resilient member, the resilient member and the axial force which it exterts, thereby being coupled through the balancing members, key members and ferrule holders to act on the fibre ferrules.

9. An optical fibre assembly as claimed in any preceding claim, wherein the resilient member comprises a spiral spring.
